# EUROPEAN PATENT SPECIFICATION

(11) **EP 2 079 802 B1**
(45) Date of publication and mention of the grant of the patent: **21.05.2014**
(21) Application number: 07807177.6
(22) Date of filing: 05.09.2007
(51) Int. Cl.: C08L 83/14

(54) **CURABLE SILICONE COMPOSITION AND CURED BODY THEREOF**
HÄRTBARE SILIKONZUSAMMENSETZUNG UND GEHÄRTETER KÖRPER DARAUS
COMPOSITION DE SILICONE DURCISSABLE ET CORPS DURCI DE LADITE COMPOSITION

(30) Priority: 28.09.2006 JP 2006265955
(43) Date of publication of application: 22.07.2009
(73) Proprietor: Dow Corning Toray Co., Ltd., Tokyo, 100-0004 (JP)
(72) Inventor: MORITA, Yoshitsugu, Ichihara-shi, Chiba 299-0108 (JP); KATO, Tomoko, Ichihara-shi, Chiba 299-0108 (JP); UEKI, Hiroshi, Ichihara-shi, Chiba 299-0108 (JP)
(74) Representative: Gillard, Richard Edward
(86) International application number: PCT/JP2007/067770
(87) International publication number: WO 2008/041459

(56) References cited:
- EP-A- 0 543 384
- EP-A- 1 101 798
- US-A- 5 344 905

## Description

### Technical Field

The present invention relates to a curable silicone composition and to a cured body obtained by curing the above composition. More specifically, the invention relates to a curable silicone composition that has good handleability and that, when cured, forms a cured body of low modulus of elasticity and low stress. The invention also relates to a cured body of low modulus of elasticity and low stress.

### Background Art

Known in the art is a curable silicone composition comprising a silicone resin having epoxy-containing alkyl groups and a curing agent (see Japanese Unexamined Patent Application Publication (hereinafter referred to as "Kokai") H05-320514 and Kokai 2005-154766). However, the silicone resin has a high viscosity because of the presence of the epoxy groups, which are polar groups, and as result, in case of containing a filler, the composition becomes difficult to handle.

On the other hand, known is a diorganopolysiloxane that has on its molecular terminal an epoxy-containing organopolysiloxane residue (see Kokai H05-140317 and Kokai H06-56999). It has been found that compounding of this diorganopolysiloxane with a curable organic resin makes it possible to improve flexibility of the cured body obtained by curing this composition. However, because of the presence of polar epoxy groups, the aforementioned diorganopolysiloxane has high viscosity, and, therefore, the organic resin composition that contains this diorganopolysiloxane has low handleability.

It is an object of the present invention to provide a curable silicone composition that has good handleability and that, when cured, forms a cured body of low modulus of elasticity and low stress. It is another object to provide a cured body of low modulus of elasticity and low stress.

### Disclosure of Invention

The curable silicone composition of the invention comprises at least the following components:
(A) a diorganopolysiloxane represented by the following general formula:

   X-R²-(R¹₂SiO)ₘR¹₂Si-R²-X

   {where R¹ designates a monovalent hydrocarbon group that has six or fewer carbon atoms and is free of aliphatic unsaturated bonds; R² designates an alkylene group; and X is an organopolysiloxane residue represented by the following average unit formula:

   (YR¹₂SiO_{1/2})ₐ(SiO_{4/2})_{b}

   (where R¹ is the same as defined above; Y is a single bond, a hydrogen atom, a group represented by aforementioned R¹, an epoxy-containing alkyl group, an alkoxysilylalkyl group, or an alkyl group with seven or more carbon atoms; however, in one molecule, at least one Y is a single bond, at least one Y is an alkyl group with seven or more carbon atoms and at least one Y is an epoxy-containing alkyl group; "a" is a positive number; "b" is a positive number; and "a/b" is a number in the range of 0.2 to 4.0), or the aforementioned group X is represented by R¹ or an alkenyl group;
   however, at least one X is the aforementioned organopolysiloxane residue; and "m" is an integer equal to or greater than 1} and
(B) a curing agent for epoxy resin.

The curable silicone composition of the invention is obtained by curing the above composition.

### Effects of Invention

The curable silicone composition of the invention has good handleability and that, when cured, forms a cured body of low modulus of elasticity and low stress. And the cured body has low modulus of elasticity and low stress.

### Detailed Description of the Invention

Let us first consider in more detail the curable silicone composition of the present invention.

Component (A), which is one of the main components of the composition, is a diorganopolysiloxane represented by the following general formula:

X-R²-(R¹₂SiO)ₘR¹₂Si-R²-X

In this formula, R¹ is a monovalent hydrocarbon group that has six or fewer carbon atoms and that is free of unsaturated aliphatic bonds. Specific examples of such a group are the following: methyl, ethyl, propyl, butyl, pentyl, hexyl, or similar alkyl groups; cyclopentyl, cyclohexyl, or similar cycloalkyl groups; phenyl, or similar aryl groups; and chloromethyl, 3,3,3-trifluoropropyl, or similar halogenated alkyl groups; of which methyl and phenyl groups are preferable. Furthermore, in the above formula, R² designates an alkylene group that is exemplified by ethylene, methylethylene, propylene, butylene, pentylene, and hexylene group, of which ethylene group is preferable.

In the above formula, X is an organopolysiloxane residue represented by the following average unit formula:

(YR¹₂SiO_{1/2})ₐ(SiO_{4/2})_{b}

where R¹ is a monovalent hydrocarbon group that has six or fewer carbon atoms and that is free of unsaturated aliphatic bonds. Such a group is exemplified by the same groups mentioned above, of which methyl and phenyl groups are preferable. Furthermore, in the above formula, Y represents a single bond, a hydrogen atom, a group designated by the aforementioned R¹, an epoxy-containing alkyl group, an alkoxysilylalkyl group, or an alkyl group with seven or more carbon atoms. The epoxy-containing alkyl group is represented by 2-glycidoxyethyl group, 3-glicydoxypropyl group, or a similar glycidoxyalkyl group; 2-(3,4-epoxycyclohexyl) ethyl, or a similar epoxycyclohexylalkyl group; and 4-oxiranylbutyl, 8-oxiranyloctyl, or a similar oxiranylalkyl group; of which a glycidoxyalkyl group is preferable, in particular, 3-glicydoxypropyl group is more preferable. The aforementioned alkyl group with seven or more carbon atoms is exemplified by heptyl, octyl, nonyl, decyl, undecyl, dodecyl, heptadecyl, and octydecyl group, of which an alkyl group having 7 to 18 carbon atoms is preferable, in particular, an alkyl group having 10 to 18 carbon atoms is more preferable. At least one Y in one molecule is a single bond through which the aforementioned R² is bonded. Furthermore, at least one Y in one molecule is an alkyl group with seven or more carbon atoms. In order to impart improved reactivity to the obtained diorganopolysiloxane, at least one Y in one molecule is an epoxy-containing alkyl group. When in the above formula X represents a group designated by R¹, this may be the same group as mentioned above, of which methyl and phenyl groups are preferable. When in the above formula X is an alkenyl group, such group is specifically exemplified by vinyl, allyl, propenyl, butenyl, pentenyl, hexenyl, and heptenyl group, of which vinyl group is preferable. Furthermore, at least one X in the above formula is the aforementioned organopolysiloxane residue. It is preferable that all Xs are the aforementioned organopolysiloxane residues. In the above formula, "a" is a positive number, "b" is a positive number, and "a/b" is a number in the range of 0.2 to 4.0.

In the above formula, "m" is an integer equal to or greater than 1, and preferably, an integer equal to or greater than 10. More specifically, in the above formula, "m" may be an integer in the range of 1 to 1,000. In order to improve industrial handleability of the composition, it is recommended that "m" be an integer in the range of 1 to 500, in particular, an integer in the range of 10 to 500.

There are no special restrictions with regard to the molecular weight of component (A), but in order to improve miscibility with component (B) or with an inorganic powder, when the latter is added to the mixture, as well as to improve handleability of the obtained composition, it is recommended that the weight average molecular weight (M_{w}) referenced to polystyrene and determined by gel permeation chromatography be in the range of 500 to 1,000,000.

Component (A) can be prepared, e.g., by causing a hydrosilylation reaction between the following constituents:
(a) an organopolysiloxane represented by the following average unit formula:

   (R³R¹₂SiO_{1/2})ₐ(SiO_{4/2})_{b}

   (where R¹ is a monovalent hydrocarbon group having six or fewer carbon atoms and is free of unsaturated aliphatic bonds; however, at least two R³s in one molecule are hydrogen atoms. Furthermore, in the above formula, "a" is a positive number, "b" is a positive number, and "a/b" is a number in the range of 0.2 to 4.0);
(b) a diorganopolysiloxane represented by the following general formula:

   R⁴-R¹₂SiO)ₘR¹₂Si-R⁴

   (where R¹ is the same as defined above, R⁴ is the same group as the aforementioned R¹ or an alkenyl group; however, at least one group designated by R⁴ is an alkenyl group; and "m" is an integer equal to or greater than 1); and
(c) an alkene group having seven or greater number of carbon atoms;
the reaction being carried out in the presence of (d) a platinum catalyst.

Constituent (a) of the composition is an organopolysiloxane which is intended for introduction of an organopolysiloxane residue to a molecular terminal of the diorganopolysiloxane. This constituent is represented by the following average unit formula:

(R³R¹₂SiO_{1/2})ₐ(SiO_{4/2})_{b}

where R¹ is a monovalent hydrocarbon group having six or fewer carbon atoms and is free of unsaturated aliphatic bonds. This group is exemplified by the same groups as mentioned above, of which methyl and phenyl groups are preferable. In the above formula, R³ is a hydrogen atom or the same group as represented by aforementioned R¹. However, at least two R³s in one molecule are hydrogen atoms. Furthermore, in the above formula, "a" is a positive number, "b" is a positive number, and "a/b" is a number in the range of 0.2 to 4.0.

There are no special restrictions with regard to the method that can be used for the preparation of the organopolysiloxane which constitutes aforementioned constituent (a). For example, the following methods can be used: co-hydrolyzation of a tetrahalosilane and a monohalosilane, co-hydrolyzation of a tetraalkoxysilane and a monoalkoxysilane, and hydrolysis and equilibrium repolymerization of tetraalkoxysilane and a tetraorganosiloxane, preferably by dropwise adding the tetraalkoxysilane while stirring an organic silicon compound selected from the group consisting of a hexaorganodisiloxane, tetraorganodisiloxane, triorganohalosilane, or diorganohalosilane in an aqueous solution of hydrochloric acid (see Kokai S61-195129).

Constituent (b) is a diorganopolysiloxane that is added to the composition to form the main chain of the diorganopolysiloxane of the invention. This constituent is represented by the following general formula:

R⁴-(R¹₂SiO)ₘR¹₂Si-R⁴

where R¹ is a monovalent hydrocarbon group that has six or fewer carbon atoms and is free of unsaturated aliphatic bonds. This group is represented by the same groups as mentioned above, of which methyl and phenyl groups are preferable. Furthermore, in the above formula, R⁴ may be the same group as the aforementioned R¹ or an alkenyl group. When R⁴ is the same group as the aforementioned R¹, it is exemplified by the same groups as mentioned above, of which the methyl group is preferable. When R⁴ is an alkenyl group, it is exemplified by vinyl, allyl, propenyl, butenyl, pentenyl, hexenyl, and heptenyl group, of which vinyl group is preferable. At least one R⁴ in the above formula is an alkenyl group, and it is preferable that all R⁴s be alkenyl groups. Furthermore, in the above formula, "m" is an integer equal to or greater than 1, and preferably, an integer equal to or greater than 10. In particular, in the above formula, "m" is an integer in the range of 1 to 1,000. In to impart to the composition improved handleability, it is recommended that "m" be an integer in the range of 10 to 500.

The following are examples of the diorganopolysiloxane that can be used as constituent (b): a dimethylpolysiloxane having one molecular terminal capped with a dimethylvinylsiloxy group and another molecular terminal capped with a trimethylsiloxy group; a dimethylpolysiloxane having both molecular terminals capped with dimethylvinylsiloxy groups; a dimethylpolysiloxane having both molecular terminals capped with dimethylallylsiloxy groups; a dimethylpolysiloxane having both molecular terminals capped with dimethylhexenylsiloxy groups; a methylethylpolysiloxane having both molecular terminals capped with dimethylvinylsiloxy groups; a methylethylpolysiloxane having both molecular terminals capped with dimethylallylsiloxy groups; a methylphenylpolysiloxane having one molecular terminal capped with a dimethylvinylsiloxy group and another molecular terminal capped with a trimethylsiloxy group; a methylphenylpolysiloxane having both molecular terminals capped with dimethylvinylsiloxy groups; a methylphenylpolysiloxane having both molecular terminals capped with dimethylallylsiloxy groups; a methylphenylpolysiloxane having both molecular terminals capped with dimethylhexenylsiloxy groups; a methylphenylpolysiloxane having both molecular terminals capped with diphenylvinylsiloxy groups; a copolymer of methylphenylsiloxane and dimethylsiloxane having both molecular terminals capped with dimethylvinylsiloxy groups; a copolymer of diphenylsiloxane and dimethylsiloxane capped at both molecular terminals with dimethylvinylsiloxy groups; a copolymer of diphenylsiloxane and dimethylsiloxane having both molecular terminals capped with dimethylallylsiloxy groups; and a diphenylpolysiloxane capped at both molecular terminals with dimethylvinylsiloxy groups.

In the above methods, constituent (b) is added to the composition in an amount such that approximately one alkenyl group contained in this component can react with one silicon-bonded hydrogen atom contained in constituent (a). More specifically, constituent (b) is added in an amount such that 0.7 to 1.1 alkenyl groups, preferably 0.7 to 1.0 alkenyl groups, and more preferably 0.8 to 1.0 alkenyl group contained in constituent (b) will react with 1.0 silicon-bonded hydrogen atom of constituent (a). If constituent (b) is added in an amount lower than the recommended lower limit, this will decrease the yield of the target product. On the other hand, if constituent (b) is added in an amount exceeding the recommended upper limit, this will not noticeably improve the yield of the target product or may cause gelling of the reaction system.

The number of silicon-bonded hydrogen atoms contained in one molecule of constituent (a) can be determined from the number-average molecular weight obtained by gel-permeation chromatography, the ratio of siloxane units determined by ¹H-, ¹³C-, and ²⁹Si-nuclear magnetic resonance analysis, and an equivalent quantity of silicon-bonded hydrogen atoms. Similarly, the number of alkenyl groups in one molecule of constituent (b) can be determined from the number-average molecular weight obtained by gel-permeation chromatography, the ratio of siloxane units determined by ¹H-, ¹³C-, and ²⁹Si-nuclear magnetic resonance analysis, and an equivalent quantity of alkenyl groups.

Constituent (c) is an alkene with seven or more carbon atoms used to introduce alkyl groups with seven or more carbon atoms to the organopolysiloxane residue. Constituent (c) is exemplified by heptene, octene, nonene, decene, undecene, dodecene, heptadecene, or octadecene, of which an alkene with 7 to 18 carbon atoms is preferable, and in particular, an alkene with 10 to 18 carbon atom is more preferable. There are no special restrictions with regard to the carbon-carbon-type double-bonding position in the aforementioned alkene, but the position on the molecular terminal is preferable for better reactivity.

In the manufacturing method, constituent (c) is used in an amount such that one or more and preferably two or more equivalent quantities of constituent (c) corresponds to one silicon-bonded hydrogen atom remaining in one molecule of the product obtained when constituent (a) reacts with constituent (b). If other components, which are described later, are not added, it is recommended to add constituent (c) in an amount exceeding the equivalent quantity relative to the silicon-bonded hydrogen atoms remaining in the product obtained as a result of the reaction between constituents (a) and (b). If constituent (c) is added in an amount below the recommended lower limit, then it will be impossible to introduce a sufficient amount of alkyl groups having seven or more carbon atoms to the organopolysiloxane residue of the obtained product.

Constituent (d) is a platinum-type catalyst used for accelerating the hydrosilylation reaction between silicon-bonded hydrogen atoms of constituent (a) and alkenyl groups of constituent (b) or for accelerating the hydrosilylation reaction between silicon-bonded hydrogen atoms contained in constituent (a) and alkenyl group of constituent (c). There are no special restrictions with regard to the amount in which the platinum-type catalyst of constituent (d) can be used provided that it is suitable for use as a hydrosilylation-reaction catalyst. Specific examples of this constituent are the following: chloroplatinic acid, an alcohol solution of chloroplatinic acid, a complex of platinum and unsaturated aliphatic hydrocarbons, a complex of platinum and vinylsiloxane, platinum black, or platinum on an activated carbon carrier.

There are no special restrictions with regard to the amount in which constituent (d) can be used in the manufacturing method. More specifically, it may be recommended to use this component in an amount such that, in terms of weight units the content of platinum atoms in constituent (d) be in the range of 0.01 to 500 ppm per total weight of the starting material. If component (d) is used in an amount lower than the recommended lower limit, it will be difficult to provide sufficient acceleration of the hydrosilylation reaction. If this component is used in an amount exceeding the recommended upper limit, this will be economically unjustifiable.

For introduction of epoxy-containing alkyl groups to the organopolysiloxane residues, the method may also include a reaction with (e) an epoxy-containing alkene. Constituent (e) is exemplified by vinylglycidylether, allylglycidylether, butenylglicidylether, or a similar alkenylglycidylether; 1,2-epoxy-4-vinylcyclohexane, 2,3-epoxy-5-vinylnorbornene, and 1,2-epoxy-1-methyl-4-isopropenylcyclohexane, of which allylglycidylether is preferable.

In the manufacturing method, constituent (e) can be added in an amount such that one or more, preferably two or more, should correspond to one silicon-bonded hydrogen atom contained in one molecule and remaining in the product obtained as a result of a reaction among constituents (a), (b), and (c). If other components do not participate in the reaction, it is recommended that constituent (e) be used in an amount exceeding the equivalent quantity with respect to the silicon-bonded hydrogen atoms remaining in the product obtained through the reaction among constituents (a), (b), and (c). If constituent (e) is added in an amount less than the recommended lower limit, it will be difficult to provide sufficient introduction of the epoxy-containing alkyl groups into the organopolysiloxane residues contained in the obtained product.

In order to introduce alkoxysilylalkyl groups to the organopolysiloxane residues, the method may also include a reaction with (f) an alkoxysilylalkene. Constituent (f) is exemplified by vinyltrimethoxysilane, vinyltriethoxysilane, methylvinyldimethoxysilane, allyltrimethoxysilane, allylmethyldiethoxysilane, and diphenylvinylmethoxysilane, of which allyltrimethoxysilane is preferable.

It is recommended to use component (g) in the method of the invention in an amount such that one or more, and preferably two or more, of constituent (f) equivalents correspond to one silicon-bonded hydrogen atom contained in one molecule and remaining in the product obtained in the reaction among constituents (a), (b), and (c). When other components do not participate in the reaction, the added amount of constituent (f) should exceed the equivalent quantity with respect to the silicon-bonded hydrogen atoms that remain in the product of the reaction among (a), (b), and (c). If constituent (f) is used in an amount less than the recommended lower limit, it will be difficult to provide sufficient introduction of the alkoxysilylalkyl groups into the organopolysiloxane residue of the obtained product.

There are no special restrictions with regard to the sequence of manufacturing and reaction steps. For example,
(1) a mixture can be prepared from constituents (a), (b), and (c), and constituent (d) is added and caused to react with the mixture;
(2) a mixture can be prepared from constituents (a), (b), and (c), constituent (d) is added and caused to react with the mixture, and then constituent (e) is added and reacts with the product;
(3) a mixture can be prepared from constituents (a), (b), and (c), constituent (d) is added and caused to react with the mixture, and then constituent (f) is added and reacts with the product;
(4) a mixture can be prepared from constituents (a), (b), and (c), constituent (d) is added and caused to react with the mixture, and then constituents (e) and (f) are added and react with the product;
(5) a mixture can be prepared from constituents (a), (b), (c), and (e), and then constituent (d) is added and caused to react with the mixture;
(6) a mixture can be prepared from constituents (a), (b), (c), and (e), and then constituent (d) is added and caused to react with the mixture, and following this, constituent (f) is added and caused to react; or
(7) a mixture can be prepared from constituents (a), (b), (c), and (f), and then constituent (d) is added and caused to react with the mixture, and following this, component (e) is added and caused to react with the mixture.

There are no special restrictions with regard to the reaction temperature, but for acceleration of the reaction to completion, the reaction can be carried out at a temperature from room temperature to 150°C. If necessary, the method of the invention can be carried out with the use of a solvent. Such a solvent may be an organic solvent, e.g., toluene, xylene, or a similar aromatic-type organic solvent; hexene, heptane, octane, or a similar aliphatic-type organic solvent; and acetone, methylethylketone, or a similar ketone-type organic solvent. A diorganopolysiloxane of component (A) produced by the aforementioned method will be obtained in the form of a reaction mixture, but the mixture can be purified by a stationary method, centrifugal separation, or by a method using difference of solubility in organic solvents.

Component (B) is a curing agent for epoxy resin that reacts with epoxy groups of component (A) and is used for curing the composition of the invention. This component comprises a compound that contains in one molecule at least two epoxy-reactive functional groups. Specific examples of such function groups are the following: a primary amine group, secondary amine group, a hydroxyl group, a phenolic hydroxyl group, a carboxylic acid group, or a silanol group. Two or more such functional groups of different types may be combined to form component (B). Two or more functional groups of the same type also may be combined to form component (B). In particular, from the viewpoint of better reactivity and longer pot life, the phenolic hydroxyl groups are preferable. More specifically, component (B) may comprise a compound that contains phenolic hydroxyl groups. Examples of such compounds are the following: phenol novolak resin, cresol novolak resin, bisphenol A-type compound, or a similar phenol-type resin; and an organopolysiloxane having phenolic hydroxyl groups. It is preferable to use an organosiloxane that contains in one molecule at least two phenolic hydroxyl groups. It is recommended that the equivalent amount of phenolic hydroxyl groups (which is a value obtained by dividing the mass average molecular weight of the present component by the number of phenolic hydroxyl groups contained in one molecule) does not exceed 1,000 and for better reactivity, does not exceed 500.

It is preferable that the organosiloxane of component (B) that contains phenolic hydroxyl groups be represented by the following formula:

R⁵₃SiO(R⁵₂SiO)ₙSiR⁵₃

Where groups designated by R³ may be the same or different and comprise optionally substituted monovalent hydrocarbon groups or monovalent organic groups that contain phenolic hydroxyl groups. The aforementioned monovalent hydrocarbon groups are exemplified by methyl, ethyl, propyl, butyl, pentyl, hexyl, or similar alkyl groups; cyclopentyl, cyclohexyl, cycloheptyl, or similar cycloalkyl groups; vinyl, allyl, butenyl, heptenyl, hexenyl, or similar alkenyl groups; phenyl, tolyl, xylyl or similar aryl groups; benzyl, phenethyl, or similar aralkyl groups; and 3-chloropropyl, 3,3,3-trifluoropropyl, or similar halogen-substituted alkyl groups; of which alkyl and aryl groups are preferable, in particular, methyl and phenyl groups are more preferable. Furthermore, the monovalent organic groups that contain phenolic organic groups can be exemplified by the formulas given below, where R⁶ designates bivalent organic groups such as ethylene, methylethylene, propylene, butylene, pentylene, hexylene, or similar alkylene groups; ethyleneoxyethylene, ethyleneoxypropylene, ethylenoxybutylene, propylenoxypropylene, or similar alkyleneoxyalkylene groups; of which alkylene groups are preferable, in particular, propylene groups are more preferable.

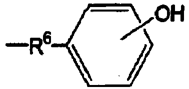

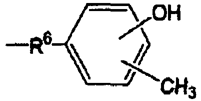

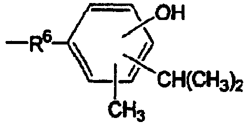

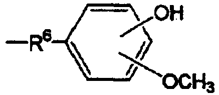

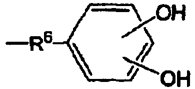

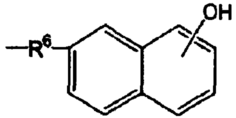

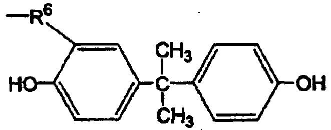

In the above formulas, "n" is an integer in the range of 0 to 1,000, preferably in the range of 0 to 100, and most preferably in the range of 0 to 20. If "n" exceeds the recommended upper limit, this will impair compounding with component (A) and handleability.

Aforementioned component (B) is exemplified by organosiloxanes represented by the formulas given below, where "x" is an integer of 1 to 20, and "y" is an integer of 2 to 10.

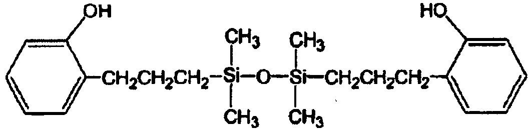

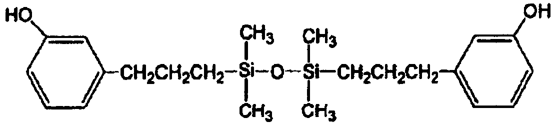

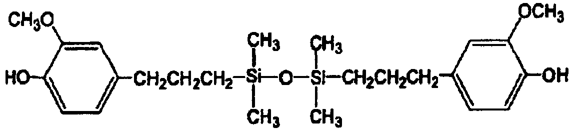

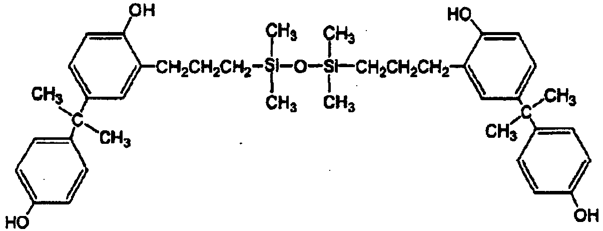

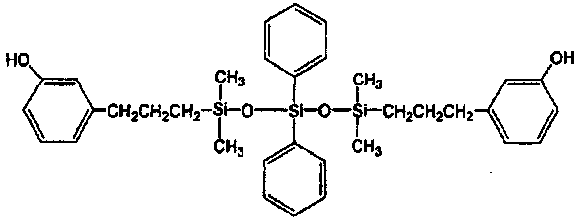

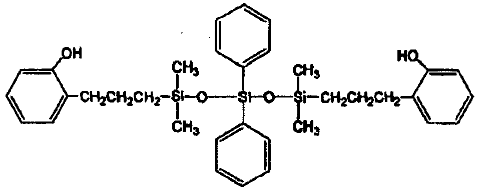

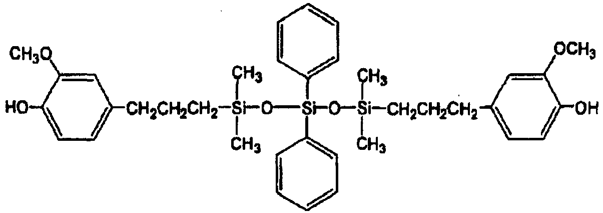

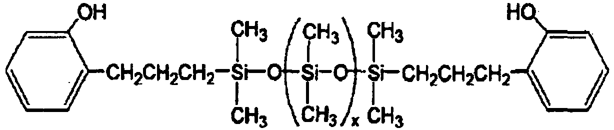

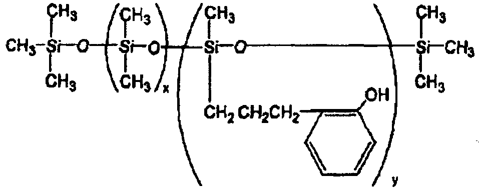

There are no special restrictions with regard to the method that can be used for manufacturing component (B). For example, this component can be obtained by subjecting an alkenyl-containing phenol compound and an organopolysiloxane that has silicon-bonded hydrogen atoms to a hydrosilylation reaction.

There are no special restrictions with regard to the state of component (B) at 25°C, and it can be in a liquid or in a solid form. The liquid form is preferred from the viewpoint of miscibility with other components and easier handling. It is recommended that the viscosity of component (B) at 25°C be in the range of 1 to 1,000,000 mPa·s, preferably 10 to 5,000 mPa·s. If the viscosity at 25°C is below the recommended lower limit, the obtained cured body will have reduced mechanical strength. If, on the other hand, the viscosity exceeds the recommended upper limit, this will impair handleability of the composition.

There are no special restrictions with regard to amounts in which component (B) can be used in the composition, but, in general, it is recommended to use this component in an amount of 0.1 to 500 parts by weight, preferably in the range of 0.1 to 200 parts by weight per 100 parts by weight of component (A). When component (B) contains phenolic hydroxyl groups, it is recommended that the mole ratio of the phenolic hydroxyl groups contained in component (B) to all epoxy groups contained in the composition be in the range of 0.2 to 5, preferably 0.3 to 2.5, and most preferably 0.8 to 1.5. If the mole ratio of the phenolic hydroxyl groups contained in component (B) to all epoxy groups contained in the composition is below the recommended lower limit, it will be difficult to ensure complete curing of the obtained composition. If, on the other hand, the aforementioned ratio exceeds the recommended upper limit, this will impair mechanical properties of the cured body obtained from the composition.

If necessary, the composition may contain an arbitrary component such as (C) a curing acceleration agent. Such component (C) may be represented by a tertiary amine compound, an organometallic compound such as organoaluminum compound, an oganozirconium compound, or the like; phosphine, or a similar organophosphorous compound; as well as heterocyclic amine compound, boron complex compound, organic ammonium salt, organic sulfonium salt, organic peroxide, and reaction products of the above compounds. Specific examples of such compounds are the following: triphenylphosphine, tributylphosphine, tri(p-methylphenyl) phosphine, tri(nonylphenyl) phosphine, triphenylphosphine-triphenyborate, tetraphenylphosphine-tetraphenyborate, or similar phosphorous compounds; triethylamine, benzyldimethylamine, α-methylbenzyldimethylamine, 1,8-diazobicyclo [5,4,0] undecene-7, or a similar tertiary amine; 2-methylimidazole, 2-phenyl-4-methylimidazole, or a similar imidazole compound. In order to extend the use time of the composition of the invention, component (C) may comprise a curing-accelerating agent in an encapsulated form. Such an encapsulated curing-accelerating agent may comprise an encapsulated amine-type curing accelerator made from a bisphenol-A epoxy resin that contains an amine-type curing accelerating substance (can be purchased from Asahi Kasei Co., Ltd.; trademark HX-3088).

There are no special restrictions with regard to the amount in which component (C) can be added to the composition, but in general it can be recommended that this component be contained in an amount not exceeding 50 parts by weight, in particular, in an amount of 0.01 to 50 parts by weight, and most preferably, 0.1 to 5 parts by weight, per 100 parts by weight of component (A).

In order to improve mechanical strength and other properties of a cured body, the composition may contain (D) a filler. Such filler (D) can be represented by the following: glass fiber, alumina fiber, ceramic fiber composed of alumina and silica, boron fiber, zirconia fiber, silicon carbide fiber, metallic fiber, or a similar fibrous filler; fused silica, crystalline silica, precipitated silica, fumed silica, baked silica, zinc oxide, baked clay, carbon black, glass beads, alumina, talc, calcium carbonate, clay, aluminum hydroxide, magnesium hydroxide, barium sulfate, aluminum nitride, boron nitride, silicon carbide, magnesia, titania, beryllium oxide, kaolin, mica, zirconia, or a similar inorganic filler; powders of gold, silver, copper, aluminum, nickel, palladium, alloys and brasses of the aforementioned metals, solders, memory alloys, or other fine metal powders; gold, silver, nickel, copper, or other metals powders vapor-deposited or deposited via metallization onto the surfaces of finally powdered ceramic, glass, quartz, organic resin, etc.; the above fillers can be used separately or in combinations of two or more. From the viewpoint of better thermal conductivity of the obtained cure body, the following fillers are preferable: alumina, zinc oxide, magnesia, titania, crystalline silica, or similar metal oxides; aluminum nitride, boron nitride, or a similar metal nitride; silicon carbide, or a similar metal carbide; aluminum hydroxide, magnesium hydroxide, or a similar metal hydroxide; carbon nanotubes, carbon microfiber, diamond, graphite, or a similar carbonaceous material. It is preferable that at least one type heat-conductive non-metal powder material selected from metal oxide, metal nitride, or metal carbide be used, especially one selected from alumina, zinc oxide, aluminum nitride, boron nitride, or silicon carbide.

The powder particles may have the shape of grounded particles, or may be spherical, fibrous, rod-like, flake-like, scale-like, plate-like, coil-like, etc. There are no special restrictions with regard to the size of the particles, but in general their maximum dimension should not exceed 200 µm, and on average should be within the range of 0.001 to 50 µm.

Also there are no special restrictions with regard to the content of component (D), but it is recommended to add this component in an amount of no more than 5000 parts by weight, preferably within the range of 10 to 4000 parts by weight, and even more preferably, within the range of 50 to 4000 parts by weight per 100 parts by weight of component (A). When component (D) contains fillers other than the aforementioned fine metal powder or heat-conductive powder, component (D) should be used in an amount of not more than 2000 parts by weight, preferably within the range of 10 to 2000 parts by weight, and even more preferably, within the range of 50 to 1000 parts by weight per 100 parts by weight of component (A).

In order to improve curability and handleability of the obtained curable silicone composition, to improve adhesive properties of the cured body of the composition, or to adjust modulus of elasticity, the composition can be further combined with (E) an organic epoxy compound. This component can be exemplified by a bisphenol-A type epoxy resin, a bisphenol-F type epoxy resin, an alicyclic epoxy resin, and a biphenyl-type epoxy resin. There are no special restriction with regard to the form of component (E) at 25°C, and it may be liquid or solid, but the liquid form is preferable. Also, there are no restrictions with regard to the amount in which component (E) can be added to the composition, but in general the content of this composition should not exceed 500 parts by weight, and preferably should be in teh range of 0.1 to 500 parts by weight per 100 parts by weigh of component (A).

In order to improve dispersity of component (D) in component (A) or to improve adhesion of the obtained cure body of silicone to semiconductor chips, substrates, or the like, the composition can be combined with (F) a coupling agent. This coupling agent may comprise a titanate coupling agent, a silane coupling agent, or a similar coupling agent. A titanate coupling agent may comprise i-propoxytitanium tri(i-isostearate). A silane coupling agent may comprise 3-glycidoxypropyl trimethoxysilane, 3-glycidoxypropyl methyldiethoxysilane, 2-(3,4-epoxycyclohexyl)ethyltrimethoxysilane, or a similar epoxy-containing alkoxysilane; N-(2-amiaoethyl)-3-aminopropyl trimethoxysilane, 3-aminopropyl triethoxysilane, N-phenyl-3-aminopropyl trimethoxysilane, or a similar amine-containing alkoxysilane; and 3-mercaptopropyl trimethoxysilane, or a similar mercapto-containing alkoxysilane. There are no special restrictions with regard to the amount in which the component (F) can be used, but in general it is recommenced to add this agent in an amount not exceeding 10 parts by weight, preferably 0.01 to 10 parts by weight per 100 parts by weight of component (A).

Other arbitrary components of the composition may be exemplified by tetramethoxysilane, tetraethoxysilane, dimethyldimethoxysilane, methylphenyldimethoxysilane, methylphenyldiethoxysilane, phenytrimethoxysilane, methyltrimethoxysilane, methyhriethoxysilane, vinyltrimethoxysilane, allyltrimethoxysilane, allyltriethoxysilane, or a similar alkoxysilane.

The composition of the invention is prepared by mixing components (A) and (B), if necessary, with an addition of other components. There are no special restrictions with regard to a method used for mixing the components. For example, components (A) and (B) and, if necessary, arbitrary components, can be mixed simultaneously, or the aforementioned arbitrary components can be added after premixing components (A) and (B). Also, there are no limitations with regard to equipment that can be used for mixing. For example, this can be a single-shaft-type or a two-shaft-type continuous mixer, a two-roll mill, a three-roll mill, Ross mixer, a Hobart mixer, a dental mixer, a planetary mixer, or a kneader mixer.

The following is a detailed description of the cured body of the invention.

Since the cured body of the invention possesses low modulus of elasticity, in addition to use as a protective material for a semiconductor chips and their wiring portions, the cured silicone body obtained by molding the composition can be used as an insulating or a shock-absorbing layer for semiconductor chips and printed circuit boards. In particular, the silicone cured body of the invention is suitable for use as an adhesive material for bonding semiconductor chips to heat-radiating elements or heat-radiating parts, as a bonding material between semiconductor chips and lead frames, or as a protective material for semiconductor chips. The are no restrictions with regard to the form of the cored body that can be in the form of soft or hard rubber, or resin. In particular, it is preferable that the cured body have composite modulus of elasticity not exceeding 2 GPa.

### Examples

The curable silicone composition and the cured body of the invention will be further described in more details with reference to practical and comparative examples. In these examples, weight average molecular weight with reference to polystyrene was measured by gel permeation chromatography.

### [Determination of Viscosity]

Viscosity of the diorganopolysiloxane at 25°C was measured by an E-type viscometer (Digital Viscometer DV-U-E Type II, the product of Tokimec Co., Ltd.), rotation speed: 20 rpm. Similarly, viscosity of the curable silicone composition at 25°C was measured by the same E-type viscometer at rotation speed of 2.5 rpm.

### [Composite Modulus of Elasticity]

A curable silicone composition was defoamed at 70 mmHg, poured into a mold having a cavity with the following dimensions: length 50 mm x width 10 mm x depth 2 mm, subjected to compression curing for 60 min. under conditions of 150°C and 2.5 MPa, and then to secondary heat treatment for 2 hours in an oven at 188°C, whereby a cured specimen was produced. This specimen was used for determining flexibility of the cured body by measuring a composite modulus of elasticity at 25°C with the use of the ARES rheometer (instrument for measuring viscoelasticity, the product of Rheometric Scientific Co., Inc., Model RDA700). Measurement was carried out at 1 Hz frequency and 0.05% twist.

### [Thermal Conductivity]

A curable silicone composition was sandwiched between upper and lower half-molds so that the composition formed a 3-mm-thick layer, and the composition was then subjected to press-molding for 15 min. at 150°C. Following this, the product was removed from the mold and heat-treated for 45 min. at 150°C. As a result, a test specimen for testing thermal conductivity was produced. The coefficient of thermal conductivity of the molded body was measured with the use of a thermal conductivity meter QTM-500 of Kyoto Electronics Manufacturing Co., Ltd.

### [Reference Example 1]

A one-liter-capacity four-neck flask equipped with a stirrer, a reflux condenser, a Dean-Stark tube, and a thermometer was loaded with the following components:
50.01 g ofan organopolysiloxane having in one molecule on average 10 silicon-bonded hydrogen atoms and represented by the following average unit formula:

   [(CH₃)₂HSiO_{1/2}]_{1.6}(SiO_{4/2})_{1.0};
144.84 g of a dimethylpolysiloxane represented by the following average formula:

   (CH₃)₂(CH₂=CH) SiO[(CH₃)₂ SiO]₉₇ Si(CH₃)₂(CH=CH₂);
12.65 g of 1-decene;
19.03 g of allylglycidylether; and
101.96 g of toluene.

The mixture was heated, an azeotropic substance that contained water in the system was removed, and the product was cooled in a nitrogenous atmosphere. In the next step, 20 µL of a 10 wt% isopropanol solution of a platinum-1,3-divinyhetramethyldisiloxane complex was dropwise added to the system, and the mixture was heated to 99°C. Following this, 38.15 g of allylglycidylether were added, and 5 min. later the mixture generated a heat to 114°C and retained at this temperature for about 40 min. Infrared analysis (hereinafter referred to as "IR") was carried out in order to verify that the reaction mixture was free of the characteristic absorption of Si-H bonds, and then the product was cooled to room temperature. Following this, the product was heated at 130°C under a reduced pressure of 1 mmHg for removal of toluene and unreacted allylglycidylether, whereby 238.8 g of a slightly brown semitransparent liquid were obtained with a yield of 98.0 %.

The obtained liquid had an epoxy equivalent equal to 831 and a viscosity of 7,300 mPa·s. The liquid was held in a quiescent state for one month at room temperature, but no separation of layers was observed. Analysis of the liquid by gel-permeation chromatography (hereinafter referred to as "GPC") showed that the main component had weight-average molecular weight (M_{w}) referenced to polystyrene equal to 57,900 and dispersion (M_{w}/Mₙ) equal to 2.4. The content of the main component was 95.2 wt.%.

Samples of the aforementioned main component were taken by means of GPC and subjected to structural analysis by carrying out ¹H-nuclear magnetic resonance analysis (hereinafter referred to as "¹H-NMR"), ¹³C-nuclear magnetic resonance analysis (hereinafter referred to as "¹³C-NMR"), and ²⁹Si-nuclear magnetic resonance analysis (hereinafter referred to as "²⁹Si-NMR"). These analyses showed that the product comprised a diorganopolysiloxane represented by the following average formula:

X-CH₂CH₂(CH₃)₂ SiO[(CH₃)₂ SiO]₉₇Si(CH₃)₂CH₂CH₂-X

{where X is an organopolysiloxane residue represented by the following average unit formula:

[Y(CH₃)₂ SiO_{1/2}]_{1.6}(SiO_{4/2})_{1.0}

(where Y consists of single bonds, n-decyl groups, and 3-glycidoxypropyl groups; one Y in one molecule is a single bond, and the remaining Ys are composed of n-decyl groups and 3-glycidoxypropyl groups; the mole ratio between these groups is approximately 1:4)}

### [Reference Example 2]

A one-liter-capacity four-neck flask equipped with a stirrer, a reflux condenser, a Dean-Stark tube, and a thermometer was loaded with the following components:
50.00 g of an organopolysiloxane having in one molecule on average 10 silicon-bonded hydrogen atoms and represented by the following average unit formula:

   [(CH₃)₂HSiO_{1/2}]_{1.6}(SiO_{4/2})_{1.0};
144.84 g of dimethylpolysiloxane represented by the following average formula:

   (CH₃)₂(CH₂=CH) SiO[(CH₃)₂ SiO]₉₇ Si(CH₃)₂(CH=CH₂);
31.85 g of 1-decene; and
104.60 g of toluene.

The mixture was heated, and an azeotropic substance that contained water in the system was removed, and the product was cooled in a nitrogenous atmosphere. In the next step, 30 µL of a 10 wt.% isopropanol solution of a platinum-1,3-divinyltetramethyldisiloxane complex was dropwise added to the system, and the mixture generated a heat to 66°C. Following this, the mixture was heated to 87°C, 32.34 g of allylglycidylether were added, and the mixture generated a heat to 109°C. Stirring was carried out for 45 min. while beating at a temperature in the range of 109°C to 117°C. 1R was carried out in order to verify that the reaction mixture was free of the characteristic absorption of Si-H bonds, and then the product was cooled to room temperature. Following this, the product was heated at 130°C under a reduced pressure of 1 mmHg for removal of toluene and unreacted allylglycidylether, whereby 243.7 g of a slightly brown semitransparent liquid were obtained with a yield of 98.0 %.

The obtained liquid had an epoxy equivalent equal to 1,169 and viscosity of 3,770 mPa·s. The liquid was held in a quiescent state for one month at room temperature, but no separation of layers was observed. Analysis of the liquid by GPC showed that the main component had weight-average molecular weight (M_{w}) referenced to polystyrene equal to 73,700 and dispersion (M_{w}/Mₙ) equal to 2.7. The content of the main component was 91.5 wt.%.

Samples of the aforementioned main component were taken by means of GPC and subjected to structural analysis by carrying out ¹H-NMR, ¹³C-NMR and ²⁹Si-NMR. These analyses showed that the product comprised a diorganopolysiloxane represented by the following average formula:

X-CH₂CH₂(CH₃)₂ SiO[(CH₃)₂ SiO]₉₇Si(CH₃)₂CH₂CH₂-X

{where X is an organopolysiloxane residue represented by the following average unit formula:

[Y(CH₃)₂ SiO_{1/2}]_{1.6} (SiO_{4/2})_{1.0}

(where Y consists of single bonds, n-decyl groups, and 3-glycidoxypropyl groups; one Y in one molecule is a single bond, and the remaining Ys are composed of n-decyl groups and 3-glycidoxypropyl groups; the mole ratio between these groups is approxiimately 1:1)}

### [Reference Example 3]

A one-liter-capacity four-neck flask equipped with a stirrer, a reflux condenser, a Dean-Stark tube, and a thermometer was loaded with the following components:
100.00 g of an organopolysiloxane having in one molecule on average 10 silicon-bonded hydrogen atoms and represented by the following average unit formula:

   [(CH₃)₂HSiO_{1/2}]_{1.6}(SiO_{4/2})_{1.6};
289.29 g of a dimethylpolysiloxane represented by the following average formula:

   (CH₃)₂(CH₂=CH) SiO[(CH₃)₂ SiO]₉₇ Si(CH₃)₂(CH=CH₂);
54.69 g of allylglycidylether; and
120.66 g of toluene.

The mixture was heated, an azeotropic substance that contained water in the system was removed, and the product was cooled in a nitrogenous atmosphere. In the next step, 35 µL of a 10 wt.% isopropanol solution of a platinum-1,3-divinyltetramethyldisiloxane complex was dropwise added to the system, and the mixture generated a heat to 63°C. Following this, the mixture was heated to 94°C, 68.15 g of allylglycidylether were added, and further the mixture generated a heat to 106°C. Stirring was carried out for 1 hour and 40 minutes at a temperature in the range of 100 to 123°C. IR was carried out in order to verify that the reaction mixture was free of the characteristic absorption of Si-H bonds, and then the product was cooled to room temperature. Toluene and unreacted allylglycidylether were removed by distillation under reduced pressure of 4 mmHg and at a temperature of 140°C, whereby 482.1 g of a slightly brown semitransparent liquid were obtained with a yield of 97.9 %.

The obtained liquid had an epoxy equivalent of 760, and viscosity of 19,900 mPa·s. The liquid was held in a quiescent state for one month at room temperature, but no separation of layers was observed. GPC of the liquid showed that the main component had weight-average molecular weight (M_{w}) referenced to polystyrene equal to 70,000 and dispersion (M_{w}/Mₙ) equal to 2.8. The content of the main component was 97.0 wt.%.

A sample of the aforementioned main component was taken by means of GPC and subjected to structural analysis by carrying out ¹H-NMR, ¹³C-NMR, and ²⁹Si-NMR. These analyses showed that the product comprised a diorganopolysiloxane represented by the following average formula:

X-CH₂CH₂(CH₃)₂ SiO[(CH₃)₂ SiO]₉₇Si(CH₃)₂CH₂CH₂-X

{where X is an organopolysiloxane residue represented by the following average unit formula:

[Y(CH₃)₂SiO_{1/2}]_{1.6}(SiO_{4/2})_{1.0}

(where Y consists of single bonds and 3-glycidoxypropyl groups; one Y in one molecule is a single bond, and the remaining Ys are 3-glycidoxypropyl groups)}.

### [Reference Example 4]

A one-liter-capacity four-neck flask equipped with a stirrer, a reflux condenser, a Dean-Stark tube, and a thermometer was loaded with the following components:
50.00 g of an organopolysiloxane having in one molecule on average to silicon-bonded hydrogen atoms and represented by the following average unit formula:

   [(CH₃)₂HSiO_{1/2}]_{1.6}(SiO_{4/2})_{1.0};
145.50 g of dimethylpolysiloxane represented by the following average formula:

   (CH₃)₂(CH₂=CH) SiO[(CH₃)₂ SiO]₉₇ Si(CH₃)₂(CH=CH₂);
56.86 g of α-octadecene; and
93.00 g of toluene.

The mixture was heated, an azeotropic substance containing water in the system was removed, and the product was cooled in a nitrogenous atmosphere. In the next step, 30 µL of a 10 wt.% isopropanol solution of a platinum-1,3-divinyltetramethyldisiloxane complex was dropwise added to the system, and the mixture generated a heat to 49°C. Following this, the mixture was heated to 96°C, 36.59 g of allylglycidylether were added, and, while being stirred, the mixture generated a heat to 125°C. The product was cooled in air, IR was carried out in order to verify that the reaction mixture was free of the characteristic absorption of Si-H bonds, and then the product was cooled to room temperature. Following this, the product was heated at 130°C under reduced pressure of 2 mmHg for removal of toluene and unreacted allylglycidylether by distillation, whereby 275.2 g of a slightly brown semitransparent liquid were obtained with the yield of 99%.

The obtained liquid had epoxy equivalent of 1,300 and viscosity of 2,450 mPa·s. The liquid was held in a quiescent state for one month at room temperature, but no separation of layers was observed. GPC of the liquid showed that the main component had weight-average molecular weight (M_{w}) referenced to polystyrene equal to 61,700 and dispersion (Mᵥ/Mₙ) equal to 2.1. The content of the main component was 85.1 wt.%.

A sample of the aforementioned main component was taken by means of GPC and subjected to structural analysis by carrying out ¹H-NMR, ¹³C-NMR, and ²⁹Si-NMR. These analyses showed that the product comprised a diorganopolysiloxane represented by the following average formula:

X-CH₂CH₂(CH₃)₂ SiO[(CH₃)₂ SiO]₉₇Si(CH₃)₂CH₂CH₂-X

{where X is an organopolysiloxane residue represented by the following average unit formula:

[Y(CH₃)₂ SiO_{1/2}]_{1.6} (SiO_{4/2})_{1.0}

(where Y consists of single bonds, n-octadecyl groups, and 3-glycidoxypropyl groups; one Y in one molecule is a single bond, and the remaining Ys are composed of n-cotadecyl groups and 3-glycidoxypropyl groups; the mole ratio between these groups is approximately 1:1)}.

### [Reference Example 5]

A one-liter-capacity four-neck flask equipped with a stirrer, a reflux condenser, a Dean-Stark tube, and a thermometer was loaded with the following components:
100.27 g of an organopolysiloxane having in one molecule on average 10 silicon-bonded hydrogen atoms and represented by the following average unit formula:

   [(CH₃)₂HSiO_{1/2}]_{1.6} (SiO_{4/2})_{1.0};
289.63 g of a dimethylpolysiloxane represented by the following average formula:

   (CH₃)₂(CH₂=CH)SiO(CH₃)₂ SiO]₉₇ Si(CH₃)₂CH=CH₂);
43.84 g of allylglycidylether;
29.50 g of allyltrimethoxysilane; and
106.10 g of toluene.

The mixture was heated, an azeotropic substance containing water contained in the system was removed, and the product was cooled in a nitrogenous atmosphere. In the next step, 39 µL of a 10 wt.% isopropanol solution of a platinum-1,3-divinyltetramethyldisiloxane complex was dropwise added to the system, and the mixture generated a heat to 76°C. Following this, 55.56 g of allylglycidylether were added, and stirring was carried out for 2 hours at a temperature between 126°C and 132°C. IR was carried out in order to verify that the reaction mixture was free of the characteristic absorption of Si-H bonds, and then the product was cooled to room temperature. Toluene and unreacted allylglycidylether were removed by distillation under reduced pressure of 1 mmHg and at a temperature of 125°C, whereby 487.0 g of a slightly brown semitransparent liquid were obtained with a yield of 97 %.

The obtained liquid had an epoxy equivalent of 793 and viscosity of 9,500 mPa·s. The liquid was held in a quiescent state for one month at room temperature, but no separation of layers was observed. GPC of the liquid showed that the main component had weight-average molecular weight (M_{w}) referenced to polystyrene equal to 60,600 and dispersion (M_{w}/Mₙ) equal to 2.5. The content of the main component was 95.0 wt.%.

A sample of the aforementioned main component was taken by means of GPC and subjected to structural analysis by carrying out ¹H-NMR ¹³C-NMR, and ⁹Si-NMR. These analyses showed that the product comprised a diorganopolysiloxane represented by the following average formula:

X-CH₂CH₂(CH₃)₂ SiO[(CH₃)₂ SiO]₉₇Si(CH₃)₂CH₂H₂-X

{where X is an organopolysiloxane residue represented by the following average unit formula:

[Y(CH₃)₂ SiO_{1/2}]_{1.6} (SiO_{4/2})_{1.0}

(where Y consists of single bonds, trimethoxypropyl groups and 3-glycidoxypropyl groups; one Y in one molecule is a single bond, and the remaining Ys are composed of trimethoxypropyl groups and 3-glycidoxypropyl groups; the mole ratio between these groups is approximately 1:4)}.

### [Practical Examples 1 to 3 and Comparative Examples 1 and 2]

Curable silicone compositions were prepared by mixing components listed below in proportions shown in Table 1 in parts by weight. The obtained compositions were measured with regard to viscosity, and the cured bodies of the compositions were measured with regard to composite modulus of elasticity and coefficients of thermal conductivity. The results of measurements are shown in Table 1.
Component (A-1): diorganopolysiloxane obtained in Reference Example 1;
Component (A-2): diorganopolysiloxane obtained in Reference Example 2;
Component (A-3): diorganopolysiloxane obtained in Reference Example 3;
Component (A-4): diorganopolysiloxane obtained in Reference Example 4;
Component (A-5): diorganopolysiloxane obtained in Reference Example 5;
Component (B-1): an organotrisiloxane (viscosity: 2,600 mPa·s; phenolic hydroxyl group equivalent: 330) represented by the following average formula: 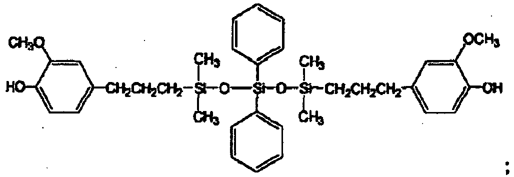
Component (B-2): a polydimethylsiloxane (viscosity: 77 mPa·s; phenolic hydroxyl group equivalent: 700) represented by the following average formula: 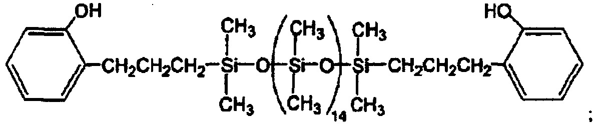
Component (C-1): A mixture of bisphenol-F epoxy resin and a bisphenol-A epoxy resin of a 35 wt.% encapsulated amine catalyst (HX-3941HP; the product of Asahi Kasei Co., Ltd.);
Component (D-1): spherical alumina powder with an average particle size of 8.6 µm;
Component (D-2): irregular alumina powder with an average particle size of 3 µm;
Component (E-1): compounded as a mixture of a bisphenol-A epoxy resin and a bisphenol F epoxy resin (prepared as a mixture of a bisphenol-A epoxy resin and a bisphenol F epoxy resin in aforementioned component (C-1));
Component (F-1): octadecyltrimethoxysilane.

**[Table 1]**

| Items | Components | Practical Examples | | | Comparative Examples | |
|---|---|---|---|---|---|---|
| | | 1 | 2 | 3 | 1 | 2 |
| Component of Curable silicone composition (parts by weight) | (A-1) | 12.6 | - | - | - | - |
| | (A-2) | - | 14.3 | - | - | - |
| | (A-3) | - | - | - | 13.0 | - |
| | (A-4) | - | - | 4.9 | - | - |
| | (A-5) | - | - | - | - | 4.0 |
| | (B-1) | 5.9 | 4.2 | - | 5.5 | - |
| | (B-2) | - | - | 4.0 | - | 4.9 |
| | (C-1) | 1.0 | 1.0 | 1.0 | 1.0 | 1.0 |
| | (D-1) | 63 | 63 | 63 | 71 | 71 |
| | (D-2) | 17 | 17 | 17 | 19 | 19 |
| | (E-1) | (0.65) | (0.65) | (0.65) | (0.65) | (0.65) |
| | (F-1) | 0.5 | 0.5 | 0.5 | 0.5 | 0.5 |
| Properties of the Composition | | | | | | |
| Viscosity (mPa·s) | | 350 | 310 | 160 | 420 | 193 |
| Properties of the cured body | | | | | | |
| Composite Modulus of Elasticity (MPa) | | 15 | 27 | 100 | 97 | 481 |
| Coeffieient of Thermal Conductivity (W/mk) | | 1.46 | 1.8 | 2.17 | 1.10 | 1.31 |

| | | | | | | |
|---|---|---|---|---|---|---|
| *(E-1) The content of this component in parts by weight is shown in (C-1). | | | | | | |

### Industrial Applicability

Since the curable silicone composition of the present invention demonstrates excellent handleability and since the cured body has low modulus of elasticity and low stress, the composition is suitable for use as a sealing agent for a semiconductor chip.

## Claims

1. A curable silicone composition comprising at least the following components:
(A) a diorganopolysiloxane represented by the following general formula:
X-R²-(R²₂SiO)ₘR¹₂Si-R²-X
where R¹ designates a monovalent hydrocarbon group that has six or fewer carbon atoms and is free of aliphatic unsaturated bonds; R² designates an alkylene group; and X is an organopolysiloxane residue represented by the following average unit formula:
(YR¹₂SiO_{1/2})ₐ(SiO_{4/2})_{b}
where R¹ is the same as defined above; Y is a single bond, a hydrogen atom, a group represented by aforementioned R¹, an epoxy-containing alkyl group, an alkoxysilylalkyl group, or an alkyl group with seven or more carbon atoms; however, in one molecule, at least one Y is a single bond, at least one Y is an alkyl group with seven or more carbon atoms and at least one Y is an epoxy-containing alkyl group; "a" is a positive number; "b" is a positive number; and "a/b" is a number in the range of 0.2 to 4.0;
or the aforementioned group X is represented by R¹ or an alkenyl group; however, at least one X is the aforementioned organopolysiloxane residue; and "m" is an integer equal to or greater than 1; and
(B) a curing agent for epoxy resin.

2. The curable silicone composition of Claim 1, wherein "m" in the formula of component (A) is an integer equal to or greater than 10.

3. The curable silicone composition of Claim 1, wherein component (B) is a compound having a phenolic hydroxyl group.

4. The curable silicone composition of Claim 3, wherein component (B) is an organosiloxane that contains in one molecule at least two phenolic hydroxyl groups.

5. The curable silicone composition of Claim 4, wherein component (B) is an organosiloxane of the following general formula:
R⁵₃SiO(R⁵₂SiO)ₙSiR⁵₃
(where R⁵ is an optionally substituted monovalent hydrocarbon group or a monovalent organic group that contains a phenolic hydroxyl group; however, at least two groups in one molecule represented by R⁵ are monovalent organic groups that contain phenolic hydroxyl groups; and "n" is an integer in the range of 0 to 1000).

6. The curable silicone composition of Claim 1, wherein component (B) is contained in an amount of 0.1 to 500 parts by weight per 100 parts by weight of component (A).

7. The curable silicone composition of Claim 1, further comprising (C) a curing accelerator.

8. The curable silicone composition of Claim 7, wherein component (C) is an encapsulated amine-type curing accelerator.

9. The curable silicone composition of Claim 7, wherein component (C) is contained in an amount of not more than 50 parts by weight per 100 parts by weight of component (A).

10. The curable silicone composition of Claim 1, further comprising (D) a filler.

11. The curable silicone composition of Claim 10, wherein component (D) is a heat-conductive powder.

12. The curable silicone composition of Claim 10, wherein component (D) is contained in an amount of not more than 5,000 parts by weight per 100 parts by weight of component (A).

13. The curable silicone composition of Claim 1, further comprising (E) an organic epoxy compound.

14. The curable silicone composition of Claim 1, further comprising (F) a coupling agent.

15. A cured body obtainable by curing the composition according to any of Claims from 1 to 14.

## Patentansprüche

1. Härtbare Silikonzusammensetzung, die mindestens die folgenden Bestandteile umfasst:
(A) ein Diorganopolysiloxan, das durch die folgende allgemeine Formel dargestellt wird:
X-R²-(R¹₂SiO)ₘR¹₂Si-R²-X
wobei R¹ für eine einwertige Kohlenwasserstoffgruppe steht, die sechs oder weniger Kohlenstoffatome aufweist und frei von aliphatischen ungesättigten Bindungen ist; R² für eine Alkylengruppe steht; und X ein Organopolysiloxanrest ist, der durch die folgende allgemeine Formel dargestellt wird:
(YR¹₂SiO_{1/2})ₐ(SiO_{4/2})_{b}
wobei R¹ wie vorstehend definiert ist; Y eine Einfachbindung, ein Wasserstoffatom, eine durch das vorstehend genannte R¹ dargestellte Gruppe, eine epoxidhaltige Alkylgruppe, eine Alkoxysilylalkylgruppe oder eine Alkylgruppe mit sieben oder mehr Kohlenstoffatomen ist; jedoch in einem Molekül mindestens ein Y eine Einfachbindung, mindestens ein Y eine Alkylgruppe mit sieben oder mehr Kohlenstoffatomen und mindestens ein Y eine epoxidhaltige Alkylgruppe ist; "a" eine positive Zahl ist, "b" eine positive Zahl ist, und "a/b" eine Zahl im Bereich von 0,2 bis 4,0 ist;
oder die vorstehend genannte Gruppe X durch R¹ oder eine Alkenylgruppe dargestellt wird; jedoch mindestens ein X der vorstehend genannte Organopolysiloxanrest ist; und "m" eine ganze Zahl gleich oder größer als 1 ist, und
(B) ein Härtungsmittel für Epoxidharz.

2. Härtbare Silikonzusammensetzung nach Anspruch 1, wobei "m" in der Formel von Bestandteil (A) eine ganze Zahl gleich oder größer als 10 ist.

3. Härtbare Silikonzusammensetzung nach Anspruch 1, wobei Bestandteil (B) eine Verbindung mit einer phenolischen Hydroxylgruppe ist.

4. Härtbare Silikonzusammensetzung nach Anspruch 3, wobei Bestandteil (B) ein Organosiloxan ist, das in einem Molekül mindestens zwei phenolische Hydroxylgruppen enthält.

5. Härtbare Silikonzusammensetzung nach Anspruch 4, wobei Bestandteil (B) ein Organosiloxan der folgenden allgemeinen Formel ist:
R⁵₃SiO(R⁵₂SiO)ₙSiR⁵₃
(wobei R⁵ eine wahlweise substituierte einwertige Kohlenwasserstoffgruppe oder eine einwertige organische Gruppe ist, die eine phenolische Hydroxylgruppe enthält; jedoch mindestens zwei Gruppen in einem Molekül, die durch R⁵ dargestellt werden, einwertige organische Gruppen sind, die phenolische Hydroxylgruppen enthalten, und "n" eine ganze Zahl im Bereich von 0 bis 1000 ist).

6. Härtbare Silikonzusammensetzung nach Anspruch 1, wobei Bestandteil (B) in einer Menge von 0,1 bis 500 Gewichtsteile pro 100 Gewichtsteile von Bestandteil (A) enthalten ist.

7. Härtbare Silikonzusammensetzung nach Anspruch 1, die ferner (C) einen Härtungsbeschleuniger umfasst.

8. Härtbare Silikonzusammensetzung nach Anspruch 7, wobei Bestandteil (C) ein verkapselter Härtungsbeschleuniger des Amintyps ist.

9. Härtbare Silikonzusammensetzung nach Anspruch 7, wobei Bestandteil (C) in einer Menge von nicht mehr als 50 Gewichtsteilen pro 100 Gewichtsteile von Bestandteil (A) enthalten ist.

10. Härtbare Silikonzusammensetzung nach Anspruch 1, die ferner (D) ein Füllmittel umfasst.

11. Härtbare Silikonzusammensetzung nach Anspruch 10, wobei Bestandteil (D) ein wärmeleitfähiges Pulver ist.

12. Härtbare Silikonzusammensetzung nach Anspruch 10, wobei Bestandteil (D) in einer Menge von nicht mehr als 5.000 Gewichtsteile pro 100 Gewichtsteile von Bestandteil (A) enthalten ist.

13. Härtbare Silikonzusammensetzung nach Anspruch 1, die ferner (E) eine organische Epoxidverbindung umfasst.

14. Härtbare Silikonzusammensetzung nach Anspruch 1, die ferner (F) einen Haftvermittler umfasst.

15. Gehärteter Körper, herstellbar durch Härten der Zusammensetzung nach einem der Ansprüche 1 bis 14.

## Revendications

1. Composition de silicone durcissable comprenant au moins les composants suivants :
(A) un diorganopolysiloxane représenté par la formule générale suivante :
X-R²-(R¹₂SiO)ₘR¹₂Si-R²-X
dans laquelle R¹ désigne un groupe hydrocarboné monovalent qui a six atomes de carbone ou moins et ne contient pas de liaisons insaturées aliphatiques ; R² désigne un groupe alkylène ; et X est un résidu organopolysiloxane représenté par la formule unitaire moyenne suivante :
(YR¹₂SiO_{1/2})ₐ(SiO_{4/2})_{b}
dans laquelle R¹ est tel que défini plus haut ; Y est une liaison simple, un atome d'hydrogène, un groupe représenté par R¹ susmentionné, un groupe alkyle contenant un époxyde, un groupe alkoxysilylalkyle, ou un groupe alkyle avec sept atomes de carbone ou plus ; cependant, dans une molécule, au moins un Y est une liaison simple, au moins un Y est un groupe alkyle avec sept atomes de carbone ou plus et au moins un Y est un groupe alkyle contenant un époxyde ; « a » est un nombre positif ; « b » est un nombre positif ; et « a/b » est un nombre dans l'intervalle de 0,2 à 4,0 ;
ou bien le groupe X susmentionné est représenté par R¹ ou un groupe alcényle ;
cependant, au moins un X est le résidu organopolysiloxane susmentionné ; et « m » est un nombre entier égal ou supérieur à 1 ; et
(B) un agent durcissant pour résine époxyde.

2. Composition de silicone durcissable selon la revendication 1, dans laquelle « m » dans la formule du composant (A) est un nombre entier égal ou supérieur à 10.

3. Composition de silicone durcissable selon la revendication 1, dans laquelle le composant (B) est un composé ayant un groupe hydroxyle phénolique.

4. Composition de silicone durcissable selon la revendication 3, dans laquelle le composant (B) est un organosiloxane qui contient dans une molécule au moins deux groupes hydroxyle phénoliques.

5. Composition de silicone durcissable selon la revendication 4, dans laquelle le composant (B) est un organosiloxane répondant à la formule générale suivante :
R⁵₃SiO(R⁵₂SiO)ₙSiR⁵₃
(dans laquelle R⁵ est un groupe hydrocarboné monovalent éventuellement substitué ou un groupe organique monovalent qui contient un groupe hydroxyle phénolique ; cependant, au moins deux groupes dans une molécule représentés par R⁵ sont des groupes organiques monovalents qui contiennent des groupes hydroxyle phénoliques ; et « n » est un nombre entier dans l'intervalle de 0 à 1000).

6. Composition de silicone durcissable selon la revendication 1, dans laquelle le composant (B) est présent en une quantité de 0,1 à 500 parties en poids pour 100 parties en poids de composant (A).

7. Composition de silicone durcissable selon la revendication 1, comprenant en outre (C) un accélérateur de durcissement.

8. Composition de silicone durcissable selon la revendication 7, dans laquelle le composant (C) est un accélérateur de durcissement de type amine encapsulé.

9. Composition de silicone durcissable selon la revendication 7, dans laquelle le composant (C) est présent en une quantité n'excédant pas 50 parties en poids pour 100 parties en poids de composant (A).

10. Composition de silicone durcissable selon la revendication 1, comprenant en outre (D) une charge.

11. Composition de silicone durcissable selon la revendication 10, dans laquelle le composant (D) est une poudre conduisant la chaleur.

12. Composition de silicone durcissable selon la revendication 10, dans laquelle le composant (D) est présent en une quantité n'excédant pas 5000 parties en poids pour 100 parties en poids de composant (A).

13. Composition de silicone durcissable selon la revendication 1, comprenant en outre (E) un composé époxyde organique.

14. Composition de silicone durcissable selon la revendication 1, comprenant en outre (F) un agent de couplage.

15. Corps durci obtensible par durcissement de la composition selon l'une quelconque des revendications 1 à 14
